# EUROPEAN PATENT SPECIFICATION

(11) **EP 0 708 895 B1**
(45) Date of publication and mention of the grant of the patent: **07.07.1999**
(21) Application number: 95918097.7
(22) Date of filing: 12.05.1995
(51) Int. Cl.: F16F 15/123

(54) **FRICTION CLUTCH DRIVEN PLATES**
VON EINER REIBUNGSKUPPLUNG GETRIEBENE PLATTEN
DISQUES D'EMBRAYAGE A FRICTION

(30) Priority: 17.05.1994 GB 9409798
(43) Date of publication of application: 01.05.1996
(73) Proprietor: AUTOMOTIVE PRODUCTS (ITALIA) S.P.A., 60030 Moie Di Maiolati (IT)
(72) Inventor: CARACINI, Pietro, I-62010 Treia (IT); GALLAGHER, Paul, Andrew, I-60030 Castelbellino Stazione (IT)
(74) Representative: Morrall, Roger
(86) International application number: GB9501076
(87) International publication number: WO9531653

(56) References cited:
- DE-A- 2 444 787
- DE-A- 3 206 068
- DE-U- 9 017 106
- FR-A- 2 669 388
- GB-A- 2 235 749
- US-A- 3 577 802

## Description

This invention relates to clutch driven plates and in particular to damping members to damp torsional vibrations in such driven plates.

It is already known, for example, to provide a friction clutch driven plate with a single or multiple stage main torsional damper for damping torsional vibrations in the driven plate and the associated vehicle drive line. Typically such a main torsional damper comprises a plurality of compression springs disposed in a circumferential array and acting in compression between a main drive plate associated with a hub of the driven plate and two side plates connected with the friction ring of the driven plate.

It is also known in such driven plates to provide a further so called "pre-damper" which is located radially inboard of the main damper between the main damper and the hub. Such pre-dampers may be single or multiple stage devices and typically comprise a plurality of smaller compression springs in a circumferential array which act between the hub and the main drive plate of the clutch to damp out high frequency small amplitude vibrations which occur particularly at engine idle speed and torque.

Such known pre-dampers are relatively complex and therefore costly to produce.

It is also known from GB-A-2235749 - showing the features of the preamble of claim 1 as well as those of the preamble of claim 10 - to provide a driven plate hub in which a radially outer hub part is capable of limited rotation relative to a radially inner hub part, said rotation being resisted by radially outwardly disposed leaf springs which are individually supported in teeth formed in the inner hub part. This is a relative complex arrangement to manufacture and is prone to problems in ensuring the long term support of the leaf spring in their associated hub teeth.

It is an object of the present invention to provide an improved form of clutch driven plate which includes a damping means which is simple in construction and therefore economical to produce.

Thus according to the present invention there is provided a clutch driven plate having a central hub for operative connection with an associated driven shaft, the hub being capable of limited rotation relative to the remainder of the driven plate against the action of a plurality of leaf springs which damp torsional vibrations in the driven plate, the driven plate being characterised by the provision of an annular damping member which is a separate component from the hub and the remainder of the driven plate, said leaf springs extending from the damping member and engaging formations on the hub.

The leaf springs may be formed as a first set of-radially extending fingers which extend inwardly from the outer ring member to engage formations on the hub.

Preferably the outer ring member has locating formations for engagement with cooperating formations on the driven plate.

Preferably the separate component and the leaf springs are formed as a one piece damping means formed from a sheet of material with the radially inner portions of the fingers twisted out of the plane of the sheet.
The outer ring member may be at least partially formed from plastics material with metal fingers extending therefrom.

The outer ring member may also include a second set of radially inwardly extending fingers which apply axial pressure on portions of the hub to generate frictional resistance to said limited relative rotation.

In a preferred construction the first set of fingers cooperate with the formations on the hub to provide two stage torsional damping.

This two stage damping may be achieved by a number of the first set of fingers being arranged to engage the formations on the hub during a first portion of said limited rotation and a further number of said first set of fingers being arranged to engage the hub formations during a second portion of said limited rotation. The relative rotation is limited by cooperating drive formations on the hub and the surrounding driven plate which engage each other with circumferential play.

The invention also provides a damping member for use between the central hub and the remainder of a clutch driven plate according to claim 1, the damping member being characterised by being a separate annular damping member comprising an outer ring member from which a plurality of leaf springs extend radially inwardly for engagement with cooperating formations on the central drive hub, the leaf springs being elastically deformable to damp torsional vibrations within the driven plate and the outer ring member also including integral locating formations for engagement with cooperating formations on a part of the driven plate other than the central hub.

Embodiments of the present invention will now be described, by way of example only, with reference to the accompanying drawings in which:
Fig 1 is a radial section through a clutch driven plate in accordance with the present invention;
Fig 2 is an end view of part of the driven plate shown in figure 1 with the friction ring and side plates and main damping springs removed;
Fig 3 shows the construction of figure 2 with the pre-damper in operation;
Fig 4 shows a side view of the pre-damper member;
Fig 5 shows a section on the line X - X of figure 4;
Fig 6 shows a typical damping characteristic for the driven plate of figures 1 to 5;
Figs 7 and 8 show views corresponding to figures 4 and 5 of a two stage pre-damper member;
Fig 9 shows operation of the two stage pre-damper of figs 7 and 8 on a larger scale;
Fig 10 shows typical two-stage damping characteristics for the device of figures 7 to 9;
Fig 11 shows a single stage pre-damping member without hysteresis and,
Fig 12 shows a hysteresis member without leaf spring pre-damping.
Figures 13 and 14 show views corresponding to figures 4 and 5 of a first embodiment of a pre-damper sub-assembly
Figures 15 and 16 show views corresponding to figures 4 and 5 of a second embodiment of a pre-damper sub-assembly.

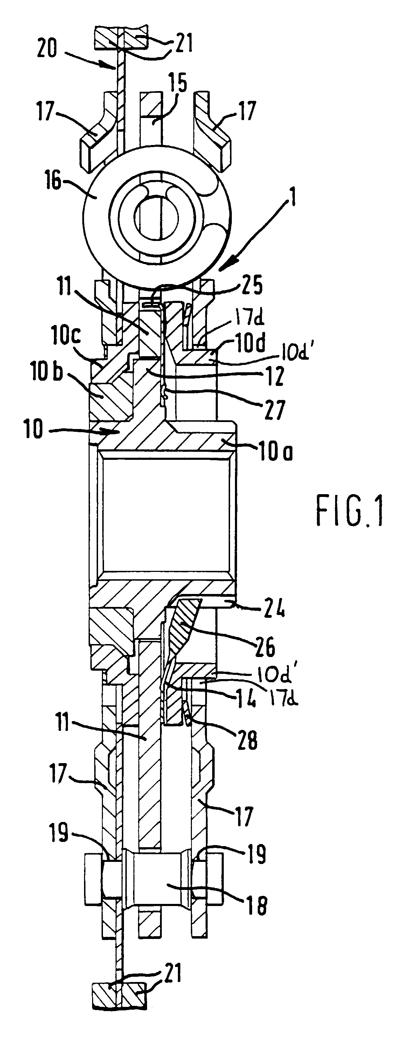

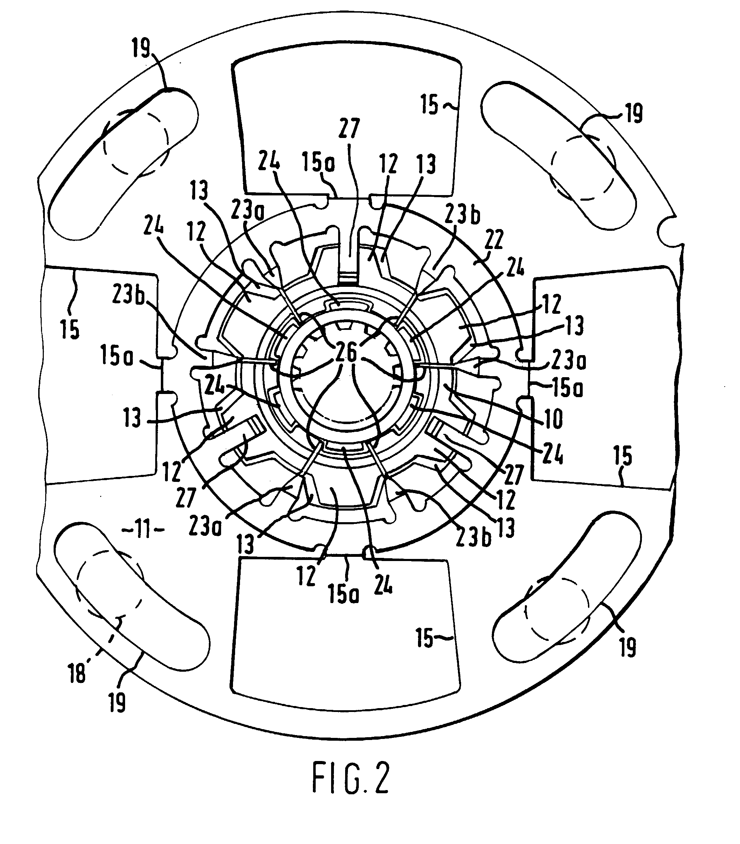

Referring to figures 1 and 2, a clutch driven plate 1 has a central hub 10, composed of main component 10a which drives a main drive plate 11 via external teeth 12 which engage cut-outs 13 in the drive plate. Plastics washers 10b, 10c and 10d maintain both axial and radial positioning between the main hub component 10a and the drive plate 11. Typically cut-outs 13 are over size and in a circumferential direction to provide the required pre-damper relative rotation between hub 10 and drive plate 11 in both the drive direction (see arrow A) and the opposite overrun direction. This relative rotation is controlled by a damping means in the form of a pre-damper member 14 whose operation and construction will be described in detail later.

Drive plate 11 is provided with windows 15 which accomodate main torsional damping springs 16 through which drive is transmitted from the drive plate 11 to side plates 17.

The degree of permitted relative rotation between drive plate 11 and side plates 17 is controlled in the conventional manner by stop pins 18 which operate in slots 19 in drive plate 11.

A friction ring 20 is rivetted to one of the side plates 17 and carries friction material 21 on both sides thereof in the normal manner.

A belleville washer 28 acts between one of the side plates 17 and plastics washer 10d to take-up play and provide hysteresis in the torsional damping of the drive plate. The plastics washer 10d is held rotationally fast in said one side plate 17 by lugs 10d' of plastic washer 10d engaging in slots 17d in said one side plate 17.

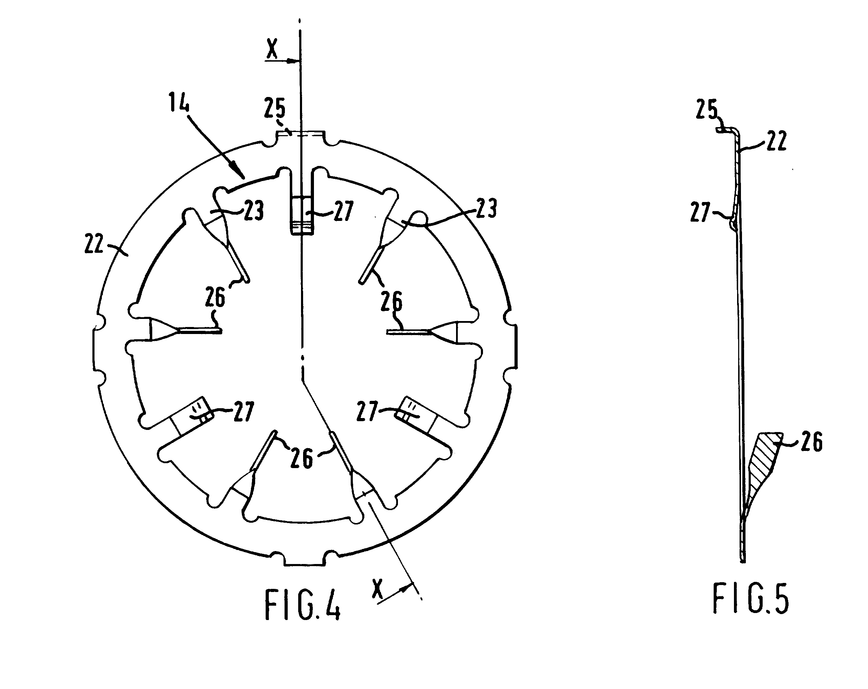

Returning now to the construction details of the pre-damper member 14, which is shown more clearly in figures 4 and 5, this comprises an outer ring member 22 from which integral leaf springs in the form of a first set of fingers 23 extend radially inwardly to engage teeth 24 provided on the central hub 10. The pre-damper member 14 is in driving engagement with the drive plate 11 via tags 25 which extend into cut-outs 15a in the radially inner edge of each window 15.

The leaf springs 23 and the outer ring 22 together with the tags 25 are formed from a flat sheet of spring steel with the radially inner portions 26 of each leaf spring which engage the hub teeth 24 being twisted at right angles to the main plane of the pre-damper member.

The pre-damper member 14 also includes a second set of radially inwardly extending fingers 27 which bear against the axially facing ends of teeth 12 to generate friction to oppose the relative rotation of teeth 12 within cut-outs 13 and thus generate hysteresis within the pre-damper.

Fig 2 shows the teeth 12 of the central hub 10 in the free (non driving) condition within the cut-outs 13 of drive plate 11. In this condition the leaf springs 23 are not bent.

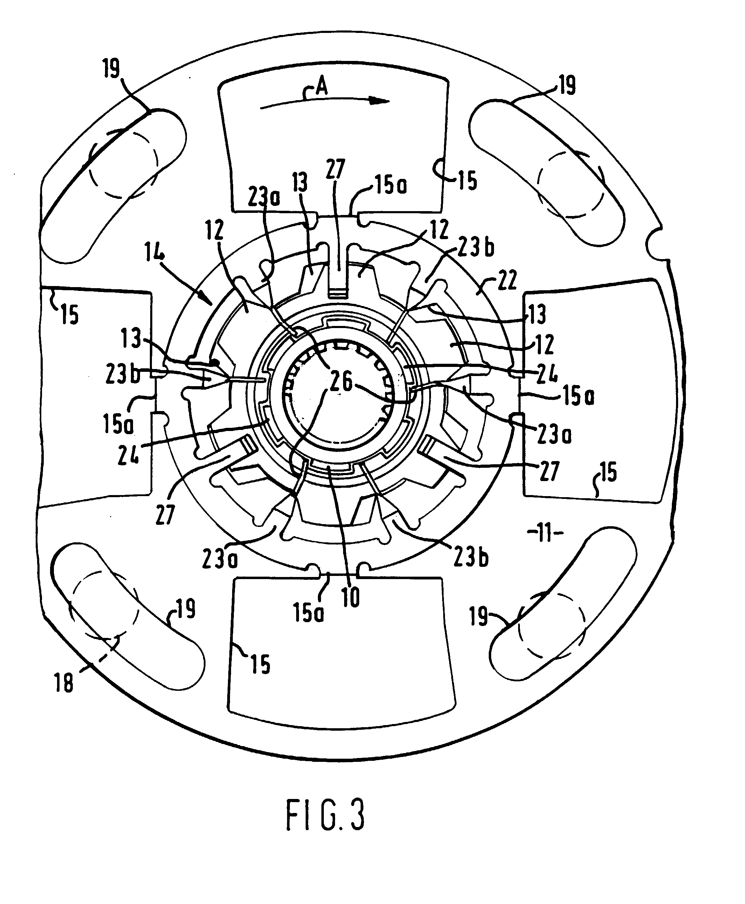

Fig 3 shows the condition of the central hub and pre-damper member when the driven plate is being driven in a clockwise direction as indicated by arrow A. In this condition the teeth 12 engage the right hand edge of each cut-out 13 and alternate leaf springs 23a are fully deflected. Relative movement of central hub 10 and drive plate 11 between the positions shown in figures 2 and 3 is resisted by the deflection of springs 23a. It will be appreciated that in the overrun condition alternate leaf springs 23b will be similarly deflected in the opposite direction. Thus leaf springs 23a control clockwise movement of teeth 12 within cutouts 13 and leaf springs 23b control anti clockwise rotation.

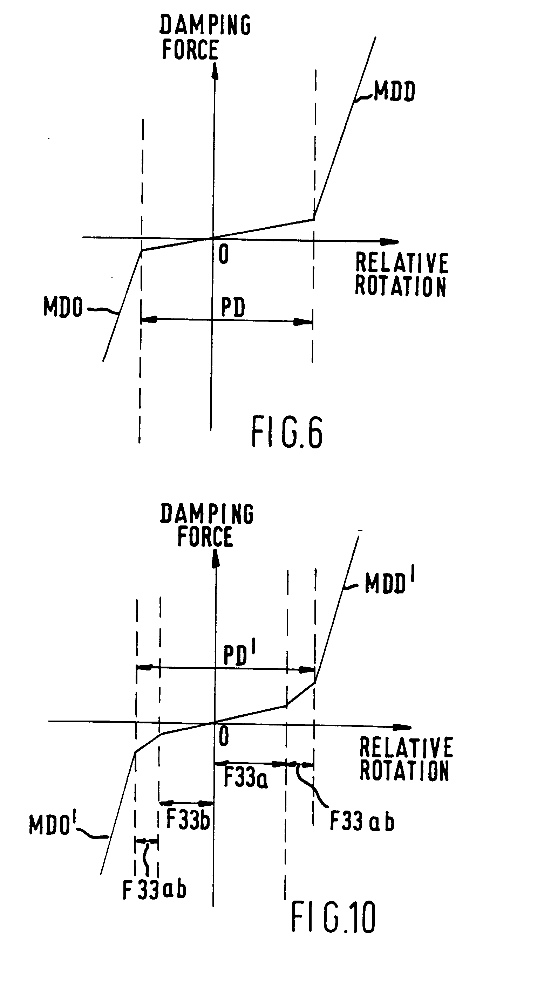

By suitable design of the relative spring rates provided by main damping springs 16 and leaf springs 23 the desired overall operating characteristics of the total driven plate can be achieved with the pre-damper 14 primarily damping the high frequency small amplitude torsional vibrations which occur at engine idle conditions. Fig 6 shows a typical single stage damping characteristic for a driven plate described above showing the lower rate of damping achieved by the pre-damper 14 in the pre-damper range PD compared to the higher rate of damping achieved by the main damping springs 16 operating in the driving range MDD and overrun range MDO.

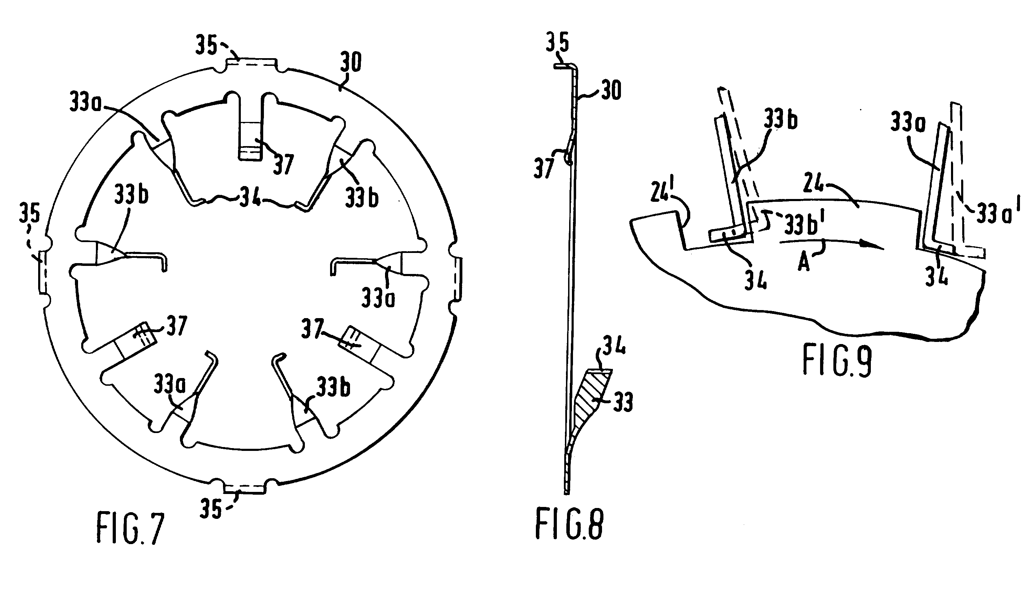

Figures 7 and 8 show an alternative pre-damper member 30 in which the leaf springs 33 are shaped to provide two stage damping by bending the end of each spring finger at right angles as indicated at 34. Pre-damper member 30 again includes friction generating fingers 37 and drive tags 35.

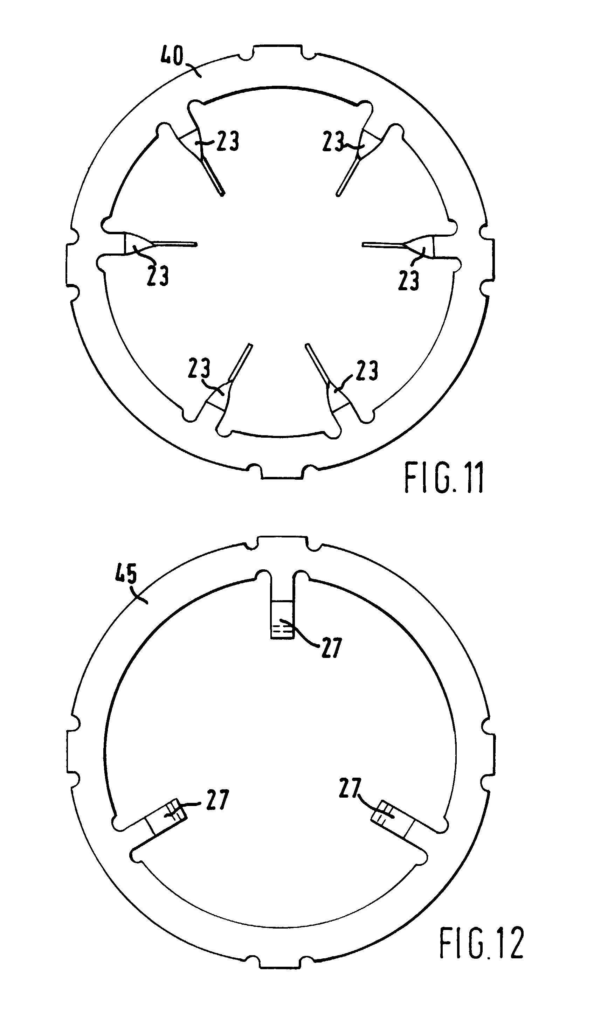

Fig 9 shows how this two stage damping operates. During the initial portion of the movement of hub teeth 24 in direction "A" leafspring fingers 33a are initially elastically deformed as indicated in Fig 9 at 33a'. During further rotational movement the ends 34 of fingers 33b are contacted by edge 24' of adjacent teeth 24 so that the fingers 33b are also elastically deformed as shown at 33b'.

This construction gives the two stage pre-damping characteristic shown diagrammatically in Figure 10. PD' represents the pre-damper range and MDD' and MDO' respresents the main damper springs operating in the drive and overrun directions respectively. Within the pre-damper range PD', F33a, F33b represents the range in which only fingers 33a and only fingers 33b are operating respectively. F33ab represents the ranges in which both fingers 33a and 33b are operating.

Fig 11 shows a single stage pre-damper member 40 provided with leafspring fingers 23 but not friction generating fingers 27.

Fig 12 shows an annular member 45 which includes friction generating fingers 27 but no leafspring fingers 23. Such a member could be used for example to generate hysteresis in a pre-damper operating with compression springs.

The pre-damper members 14, 30 and 40 and the hysteresis member 45 shown in Figs 4, 7, 11 and 12 respectively may be constructed with their outer ring members 22 etc of axially wavy form in order to provide hysteresis thus rendering the provision of belleville washer 28 unnecessary.

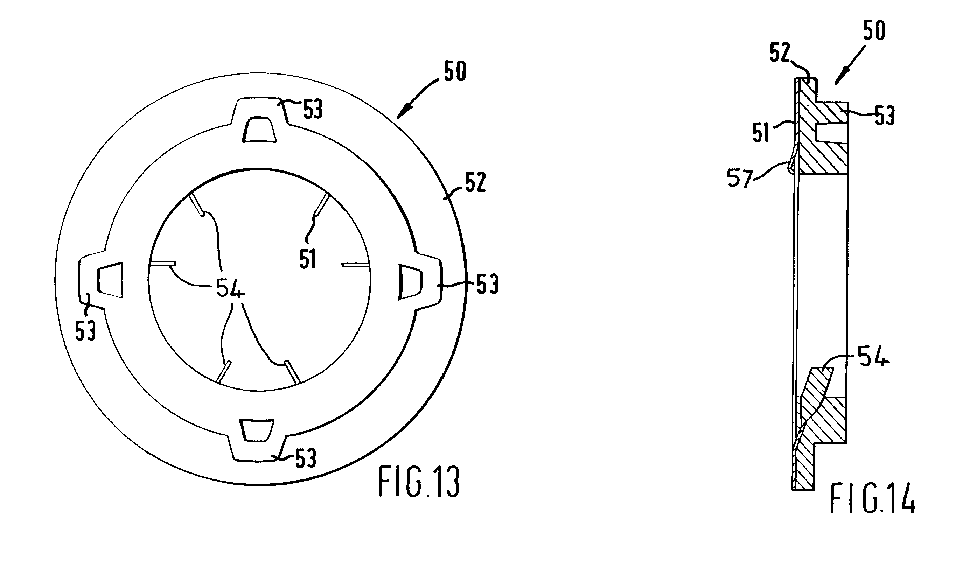

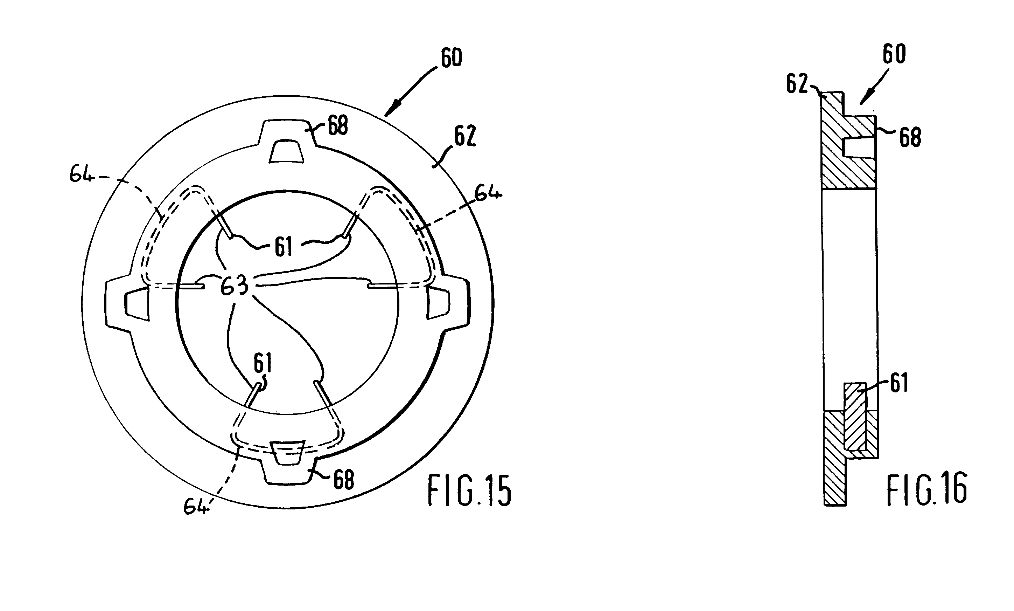

With reference to figures 13 and 14 there is shown an embodiment of a pre-damper sub-assembly 50 in which a pre-damper member 51 (similar to pre-damper member 14 except without tags 25) is partially embedded in a plastics washer 52. This sub-assembly cannot be disassembled without distruction of either the pre-damper member 51 or plastics washer 52. Pre-damper member 51 has leaf springs 54 and 57.

When built into the clutch driven plate 1 of figure 1 the sub-assembly 50 replaces pre-damper member 14 and plastics washer 10d.

Operation of the modified clutch driven plate of fig 1 with a pre-damper sub-assembly 50 is similar to the operation of the unmodified clutch driven plate except that the pre-damper member 51 is integral with plastics washer 52 which in turn is rotationally fast with side plate 17 via lugs 53. This has no effect on damping levels in the pre-damper range since in this range the retainer plate 17 and drive plate 11 are rotationally fast. Relative rotation of the retainer plate 17 and drive plate 11 in the main damper range causes friction force to be generated between pre-damper sub-assembly 50 and drive plate 11. This friction force is similar to the friction force developed between the pre-damper member 14 and the plastics washer 10d the unmodified clutch driven plate of figure 1, when relative rotation of the retainer plate 17 and drive plate 11 occurs.

With reference to figures 15 and 16 there is shown a further embodiment of a pre-damper sub-assembly 60 in which three pre-damper members 61 are partially embedded in and integral with a plastics washer 62. This sub-assembly 60 cannot be disassembled without distruction of either the pre-damper members 61 or the plastics washer 62. Each pre-damper member has two leaf springs 63 joined by an arcuate portion 64. Lugs 68 fulfil the same functions as lugs 53. Operation of a clutch driven plate fitted with a pre-damper sub-assembly 60 is similar to the operation of a clutch driven plate fitted with a pre-damper sub-assembly 50.

## Claims

1. A clutch driven plate (1) having a central hub (10) for operative connection with an associated driven shaft, the hub being capable of limited rotation relative to the remainder of the driven plate against the action of a plurality of leaf springs (23,33,54,63) which damp torsional vibrations in the driven plate, the driven plate being characterised by the provision of an annular damping member (14, 30, 40, 50, 60) which is a separate component from the hub (10) and the remainder of the driven plate, said leaf springs (23,33,54,63) extending from the damping member and engaging formations (24) on the hub.

2. A driven plate according to Claim 1 characterised in that the leaf springs (23,33,54,63) are formed as a first set of fingers (23,33,54,63) which extend inwardly from an outer ring member (22,52,62) to engage the formations (24) on the hub.

3. A driven plate according to Claim 2 characterised in that the outer ring member (22,52,62) has locating formations (25,53,64) for engagement with cooperating formations (15a,17d) on the driven plate.

4. A driven plate according to Claim 2 characterised in that the separate annular damping member (14,30,40) is formed from a sheet of material with the radially inner portions of the fingers (23,33) twisted out of the plane of the sheet.

5. A driven plate according to Claim 2 characterised in that the outer ring member (52,62) is at least partially formed from plastics material with metal fingers (54,63) extending therefrom.

6. A driven plate according to any one of claims 2 to 5 characterised in that the outer ring member also includes a second set of radially inwardly extending fingers (27,37,57) which apply axial pressure on portions of the hub to generate frictional resistance to said limited relative rotation.

7. A driven plate according to any one of claims 2 to 6 characterised in that the first set of fingers (33) cooperate with the formations on the hub to provide two stage torsional damping.

8. A driven plate according to Claim 7 characterised in that the two stage damping is provided by a number (33a) of the first set of fingers being arranged to engage the formations (24) on the hub (10a) during a first portion of said limited rotation and a further number (33b) of said first set of fingers arranged to engage the hub formations during a second portion of said limited rotation.

9. A driven plate according to any one of claims 2 to 8 characterised in that the outer ring member is of axially wavy form to generate friction damping/hysteresis in co-operation with contacting components of the driven plate.

10. A damping member (14,30,40,50,60) for use between the central hub (10) and the remainder of a clutch driven plate (1) according to claim 1, the damping member being characterised by being a separate annular damping member comprising an outer ring member (22,52,62) from which a plurality of leaf springs (23,33,54,63) extend radially inwardly for engagement with cooperating formations (24) on the central drive hub (10), the leaf springs being elastically deformable to damp torsional vibrations within the driven plate and the outer ring member also including integral locating formations (25,53,68) for engagement with cooperating formations (15a,17d) on a part of the driven plate other than the central hub (10).

## Patentansprüche

1. Angetriebene Kupplungsscheibe (1), die eine zentrale Nabe (10) für eine Wirkverbindung mit einer zugeordneten angetriebenen Welle hat, wobei die Nabe zu einer begrenzten Drehung relativ zum Rest der angetriebenen Scheibe gegen die Wirkung einer Vielzahl an Blattfedern (23, 33, 54, 63) fähig ist, welche Drehschwingungen in der angetriebenen Scheibe dämpfen, wobei die angetriebene Scheibe durch die Bereitstellung eines ringförmigen Dämpfungsgliedes (14, 30, 40, 50, 60) gekennzeichnet ist, das ein von der Nabe (10) und dem Rest der angetriebenen Scheibe separates Bauteil ist, wobei die Blattfedern (23, 33, 54, 63) sich von dem Dämpfungsglied erstrecken und mit Gebilden (24) an der Nabe in Eingriff sind.

2. Angetriebene Scheibe gemäß Anspruch 1, dadurch gekennzeichnet, daß die Blattfedern (23, 33, 54, 63) als eine erste Gruppe von Fingern (23, 33, 54, 63) gebildet sind, die sich von einem äußeren Ringglied (22, 52, 62) nach innen erstrecken, um an den Gebilden (24) an der Nabe anzugreifen.

3. Angetriebene Scheibe gemäß Anspruch 2, dadurch gekennzeichnet, daß das äußere Ringglied (22, 52, 62) Fixiergebilde (25, 53, 64) für den Eingriff mit zusammenwirkenden Gebilden (15a, 17d) an der angetriebenen Scheibe hat.

4. Angetriebene Scheibe gemäß Anspruch 2, dadurch gekennzeichnet, daß das separate ringförmige Dämpfungsglied (14, 30, 40) aus einem blattförmigen Material gebildet ist, wobei die radial inneren Teile der Finger (23, 33) aus der Ebene des Blattes heraus verdreht sind.

5. Angetriebene Scheibe gemäß Anspruch 2, dadurch gekennzeichnet, daß das äußere Ringglied (52, 62) mindestens teilweise aus Kunststoff gebildet ist, wobei Metallfinger (54, 63) davon wegragen.

6. Angetriebene Scheibe gemäß irgendeinem der Ansprüche 2 bis 5, dadurch gekennzeichnet, daß das äußere Ringlied auch eine zweite Gruppe von radial nach innen sich erstreckenden Fingern (27, 37, 57) enthält, die axialen Druck auf Teile der Nabe ausüben, um einen Reibungswiderstand gegen die begrenzte Relativdrehung zu erzeugen.

7. Angetriebene Scheibe gemäß irgendeinem der Ansprüche 2 bis 6, dadurch gekennzeichnet, daß die erste Gruppe von Fingern (33) mit den Gebilden an der Nabe zusammenwirken, um eine zweistufige Drehdämpfung zu schaffen.

8. Angetriebene Scheibe gemäß Anspruch 7, dadurch gekennzeichnet, daß die zweistufige Dämpfung dadurch erhalten wird, daß eine Anzahl (33a) der ersten Gruppe von Fingern so angeordnet ist, daß sie an den Gebilden (24) an der Nabe (10a) während eines ersten Abschnitts der begrenzten Drehung angreifen, und eine weitere Anzahl (33b) der ersten Gruppe von Fingern so angeordnet ist, daß sie an den Nabengebilden während eines zweiten Abschnitts der begrenzten Drehung angreifen.

9. Angetriebene Scheibe gemäß irgendeinem der Ansprüche 2 bis 8, dadurch gekennzeichnet, daß das äußere Ringglied eine axial wellige Form hat, um Reibungsdämpfung/-hysterese in der Zusammenwirkung mit berührenden Bauteilen der angetriebenen Scheibe erzeugen.

10. Dämpfunglied (14, 30, 40, 50, 60) zum Gebrauch zwischen der zentralen Nabe (10) und dem Rest einer angetriebenen Kupplungsscheibe (1) gemäß Anspruch 1, wobei das Dämpfungsglied dadurch gekennzeichnet ist, daß es ein separates ringförmiges Dämpfungsglied ist, das ein äußeres Ringglied (22, 52, 62) aufweist, von dem sich eine Vielzahl an Blattfedern (23, 33, 54, 63) radial nach innen für den Eingriff mit zusammenwirkenden Gebilden (24) an der zentralen Antriebsnabe (10) erstreckt, wobei die Blattfedern elastisch verformbar sind, um Drehschwingungen innerhalb der angetriebenen Scheibe zu dämpfen, und das äußere Ringglied auch damit einteilige Fixiergebilde (25, 53, 68) für den Eingriff mit zusammenwirkenden Gebilden (15a, 17d) an einem Teil der angetriebenen Scheibe enthält, der ein anderer als die zentrale Nabe (10) ist.

## Revendications

1. Disque d'embrayage (1) présentant un moyeu central (10) conçu pour une liaison fonctionnelle avec un arbre d'entraînement associé, le moyeu étant capable d'une rotation limitée par rapport au reste du disque pour s'opposer à l'action d'une pluralité de ressorts à lame (23, 33, 54, 63) qui amortissent des vibrations de torsion dans le disque, le disque étant caractérisé par la présence d'un organe d'amortissement annulaire (14, 30, 40, 50, 60) qui est un composant séparé du moyeu (10) et du reste du disque, lesdits ressort à lame (23, 33, 54, 63) partant de l'organe d'amortissement et venant en prise avec des formations (24) situées sur le moyeu.

2. Disque selon la revendication 1, caractérisé en ce que les ressorts à lame (23, 33, 54, 63) sont formés comme un premier jeu de doigts (23, 33, 54, 63) qui s'étendent vers l'intérieur à partir d'un élément extérieur formant bague (22, 52, 62) afin de venir en prise avec les formations (24) situées sur le moyeu.

3. Disque selon la revendication 2, caractérisé en ce que l'élément extérieur formant bague (22, 52, 62) présente des formations d'emplacement (25, 53, 64) destinées à venir en prise avec des formations de coopération (15a, 17d) situées sur le disque.

4. Disque selon la revendication 2, caractérisé en ce que l'organe d'amortissement annulaire (14, 30, 40) séparé est constitué d'une feuille de matériau, les parties radialement intérieures des doigts (23, 33) étant déformées en fonction du plan de la feuille.

5. Disque selon la revendication 2, caractérisé en ce que l'élément extérieur formant bague (52, 62) est au moins partiellement fait en matière plastique d'où partent des doigts métalliques (54, 63).

6. Disque selon l'une quelconque des revendications 2 à 5, caractérisé en ce que l'élément extérieur formant bague comprend aussi un deuxième jeu de doigts (27, 37, 57) s'étendant radialement vers l'intérieur, qui appliquent une pression axiale sur des parties du moyeu afin de générer une résistance de frottement à ladite rotation relative limitée.

7. Disque selon l'une quelconque des revendications 2 à 6, caractérisé en ce que le premier jeu de doigts (33) coopère avec les formations situées sur le moyeu afin de fournir un amortissement de torsion à deux étages.

8. Disque selon la revendication 7, caractérisé en ce que l'amortissement à deux étages est fourni par un certain nombre (33a) de doigts du premier jeu de doigts, qui est agencé de manière à venir en prise avec les formations (24) situées sur le moyeu (10a) durant une première partie de ladite rotation limitée, et un autre nombre (33b) de doigts dudit premier jeu de doigts, qui est agencé de manière à venir en prise avec les formations de moyeu durant une deuxième partie de ladite rotation limitée.

9. Disque selon l'une quelconque des revendications 2 à 8, caractérisé en ce que l'élément extérieur formant bague a une forme axialement ondulée afin de générer un(e) amortissement/hystérésis à frottement en coopération avec des composants de contact du disque.

10. Organe d'amortissement (14, 30, 40, 50, 60) à utiliser entre le moyeu central (10) et le reste d'un disque d'embrayage (1) selon la revendication 1, l'organe d'amortissement étant caractérisé par le fait d'être un organe d'amortissement annulaire séparé comprenant un élément extérieur formant bague (22, 52, 62) à partir duquel une pluralité de ressorts à lame (23, 33, 54, 63) s'étend radialement vers l'intérieur pour venir en prise avec des formations de coopération (24) situées sur le moyeu d'entraînement central (10), les ressorts à lame étant élastiquement déformables afin d'amortir des vibrations de torsion à l'intérieur du disque, et l'élément extérieur formant bague comprenant aussi des formations d'emplacement solidaires (25, 53, 68) en vue d'une mise en prise avec des formations de coopération (15a, 17d) situées sur une partie du disque autre que le moyeu central (10).
